# DEMANDE DE BREVET EUROPEEN

(11) **EP 1 867 518 A1**
(43) Date de publication de la demande: **19.12.2007**
(21) Numéro de dépôt: 07109757.0
(22) Date de dépôt: 06.06.2007
(51) Int. Cl.: B60N 2/16, B60N 2/44

(54) **Dispositif de réglage en hauteur d'un siège blocable en position et siège équipé du dispositif.**

(30) Priorité: 14.06.2006 FR 0605303
(71) Demandeur: Faurecia Sièges d'automobile, 92000 Nanterre (FR)
(72) Inventeur: Navatte, Nicolas, 61100 Flers (FR)
(74) Mandataire: Cabinet Plasseraud

(57) **Abrégé**

Dispositif de réglage (6), en particulier destiné à régler en hauteur une assise (3) de siège (1) de véhicule, comprenant :
- un support (14) muni de crans (22),
- un élément rotatif (16) guidé en rotation autour d'un axe de rotation (X),
- un système de commande (18) pour faire tourner l'élément rotatif par rapport au support,
- un système de verrouillage (20) pour sélectivement interdire ou autoriser la rotation de l'élément rotatif (16) par rapport au support (14),
- un élément de blocage (24) comprenant au moins une portion de crantage (26a, 26b) s'insérant dans l'un au moins des crans (22) dans une position active et étant à l'écart desdits crans (22) dans une position inactive,
- des moyens de pression (30a, 30b) sollicitant l'élément de blocage (24) vers sa position active,
- des moyens de liaison (36, 68a, 68b) retenant l'élément rotatif (16) par rapport à l'élément de blocage (24).

## Description

L'invention concerne un dispositif de réglage, en particulier destiné à régler en hauteur une assise de siège de véhicule.

Le document FR-2 792 264 décrit un dispositif de réglage de ce type comprenant :
- un support,
- un élément rotatif guidé en rotation autour d'un axe de rotation,
- un système de commande pour faire tourner l'élément rotatif par rapport au support,
- un système de verrouillage pour sélectivement interdire ou autoriser la rotation de l'élément rotatif par rapport au support.

Un tel système s'est avéré ne pas permettre d'interdire complètement la rotation de l'élément rotatif par rapport au support, notamment en présence de vibrations, du fait d'un manque d'adhérence entre surfaces graissées pour réduire les bruits, augmenter la longévité du dispositif et réduire les efforts nécessaires pour le manipuler.

Pour remédier à cet inconvénient, conformément à l'invention, le dispositif de réglage comprend en outre :
- des crans solidaires du support,
- un élément de blocage comprenant au moins une portion de crantage, ledit élément de blocage étant radialement mobile entre une position active dans laquelle ladite portion de crantage est inséré dans l'un au moins des crans pour bloquer la rotation de l'élément de blocage par rapport au support autour de l'axe de rotation et une position inactive dans laquelle ladite portion de crantage est à l'écart desdits crans pour autoriser la rotation de l'élément de blocage par rapport au support autour de l'axe de rotation,
- des moyens de pression sollicitant l'élément de blocage vers sa position active,
- des moyens de liaison retenant l'élément rotatif en rotation autour de l'axe de rotation par rapport à l'élément de blocage.

Ainsi, lorsque l'élément de blocage est en position active, il est mécaniquement bloqué en venant en buter contre les crans.

Selon une autre caractéristique conforme à l'invention, la rotation de l'élément rotatif en l'absence de rotation du système commande engendre avantageusement une force agissant sur l'élément de blocage dans le sens de l'insertion de la portion de crantage dans les crans.

Ainsi, plus l'élément rotatif est soumis à un couple élevé, plus la résistance à la rotation entre l'élément de blocage et le support est élevé.

Selon une autre caractéristique conforme à l'invention, l'élément de blocage est avantageusement constitué d'une plaque découpée intégrant une patte radialement contrainte constituant les moyens de pression.

Ainsi, le coût pour réaliser le dispositif est réduit.

Selon une autre caractéristique conforme à l'invention, le support comprend avantageusement un chemin discontinu comprenant une succession de portions d'appui entre lesquelles s'étendent radialement vers l'extérieur les crans et la patte vient en appui simultanément sur une pluralité de portions successives dudit chemin.

Ainsi, la compacité du dispositif suivant la direction de l'axe de rotation est accrue.

Selon une autre caractéristique conforme à l'invention, chaque portion de crantage comprend avantageusement une pluralité de dents s'insérant chacune dans un cran correspondant.

Ainsi, la robustesse et la résistance mécanique du dispositif sont améliorées.

Selon une autre caractéristique conforme à l'invention, l'élément de blocage comprend avantageusement une première portion de crantage bloquant la rotation de l'élément de blocage par rapport au support autour de l'axe de rotation dans un premier sens de rotation et une deuxième portion de crantage bloquant la rotation de l'élément de blocage par rapport au support autour de l'axe de rotation dans un deuxième sens de rotation opposé au premier sens de rotation.

Ainsi, quelque soit le sens dans lequel le dispositif de réglage est sollicité, le dispositif reste dans la position réglée par l'utilisateur jusqu'à ce que ce dernier agisse sur le système de commande.

Selon une autre caractéristique conforme à l'invention, le système de verrouillage comprend avantageusement :
- une couronne liée au support,
- une came liée à l'élément rotatif, la came et la couronne définissant entre elles un chemin de glissement et de coincement,
- des éléments de glissement et de coincement disposés dans le chemin de glissement et de coincement, ces éléments de glissement et de coincement étant normalement dans un état verrouillé dans lequel ils coopèrent avec la came et la couronne pour empêcher la rotation de la came par rapport à la couronne autour de l'axe de rotation en l'absence d'action sur le système de commande, le système de commande étant adapté pour amener les éléments de glissement et de coincement dans un état déverrouillé dans lequel ils autorisent la rotation de la came par rapport à la couronne autour de l'axe de rotation.

Selon une caractéristique complémentaire conforme à l'invention, le système de commande comprend avantageusement au moins un doigt adapté pour amener les dents en position inactive et pour amener les éléments de glissement et de coincement dans l'état déverrouillé par rotation autour de l'axe de rotation.

Ainsi, le dispositif est simplifié et sa robustesse est accrue.

Selon une autre caractéristique conforme à l'invention, les moyens de liaison comprennent des protubérances faisant saillie sur l'élément rotatif suivant la direction de l'axe de rotation et s'insérant dans des ouvertures complémentaires ménagées dans l'élément de blocage.

Cette solution simple et fiable réduit le coût du dispositif.

L'invention concerne en outre un véhicule comportant un plancher et un siège comprenant une assise, un dossier et le dispositif précité pour régler la hauteur de l'assise par rapport au plancher

D'autres particularités et avantages de la présente invention apparaîtront dans la description ci-après d'exemples de réalisation non limitatifs, en référence aux dessins annexés dans lesquels :
- la figure 1 est une vue schématique d'un siège de véhicule dont l'assise est réglable en hauteur au moyen d'un dispositif de réglage conforme à l'invention,

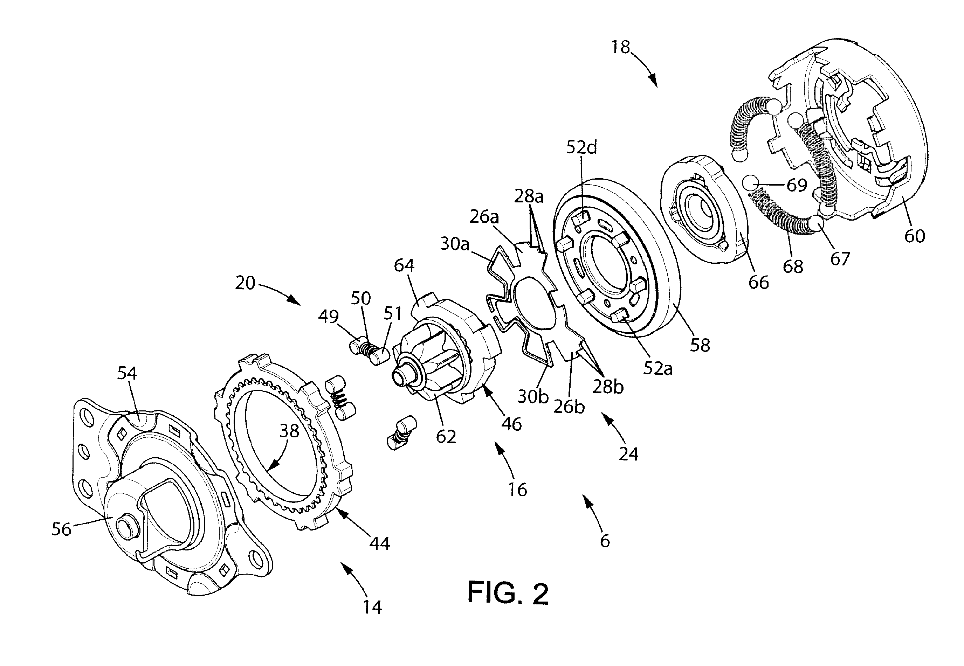

- la figure 2 est une vue en perspective éclatée du dispositif de réglage,
- la figure 3 est une vue en coupe axiale suivant la ligne repérée III-III à la figure 4 du dispositif de réglage,
- la figure 4 est une vue en coupe transversale suivant la ligne repérée IV-IV à la figure 3 du dispositif de réglage, en l'absence d'action sur le système commande,
- la figure 5 est une vue conformément à la figure 4 du dispositif de réglage, en présence d'une action sur le système de commande.

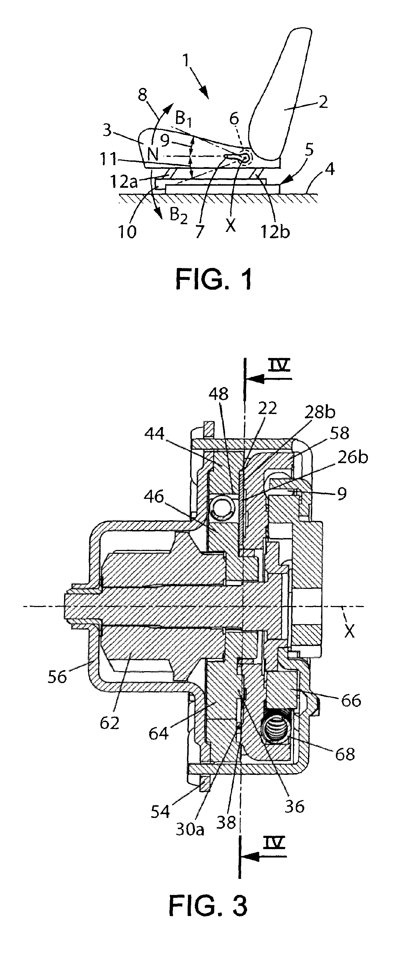

La figure 1 représente un siège 1 de véhicule qui comporte essentiellement une assise 3, un dossier 2 porté par l'assise 3, un mécanisme de rehausse et un dispositif 6 de réglage de la hauteur de l'assise.

L'assise 3 est montée sur un plancher 4 du véhicule, par l'intermédiaire de glissières longitudinales 5 et du mécanisme de rehausse. Le mécanisme de rehausse comprend des bielles 12a, 12b articulées chacune à une extrémité sur les glissières et à l'autre extrémité sur l'assise 3. Les bielles 12a, 12b sont entraînées en rotation par le dispositif de réglage 6.

Le levier 7 sollicité élastiquement vers une position repos N, dans laquelle ledit levier peut être disposé par exemple sensiblement horizontalement. A partir de cette position repos, le levier est déplaçable selon un premier sens angulaire 8, dans un premier secteur angulaire 9 délimité entre la position de repos N et une première position de butée B1, et selon un deuxième sens angulaire 10, dans un deuxième secteur angulaire 11 délimité entre la position de repos N et une deuxième position de butée B2.

Le dispositif de réglage 6 comprend essentiellement un support 14, un élément rotatif 16, un système de commande 18, un système de verrouillage 20 et un élément de blocage 24.

Le support 14 comprend essentiellement un flasque 54 s'étendant perpendiculairement à l'axe de rotation X, une cloche 56, une couronne 44 et un capot 60. La cloche 56 est obtenue de matière avec le flasque 54 et intègre un alésage formant palier. Le capot 60 est fixé de manière amovible sur le flasque 54. La couronne 44 est rapportée sur le flasque 54 auquel elle est fixée rigidement. La couronne 44 comprend un chemin annulaire 38 discontinu formé d'une succession de portions d'appui 40 et de crans 22 s'étendant radialement vers l'extérieur.

L'élément rotatif 16 intègre à chacune de ses extrémités suivant l'axe de rotation X une surface annulaire externe coopérant respectivement avec le palier du support 14 et un palier du dispositif de commande 18. L'élément rotatif 16 comprend en outre un pignon 62 coopérant avec la bielle 12b du mécanisme de rehausse et une came 46. La came 46 comprend trois pattes 64 faisant saillie radialement définissant des évidements 48 formant chemin de glissement et de coincement entre la came 46 et la couronne 44. L'élément rotatif 16 comprend en outre trois tétons 36 faisant vers le dispositif de commande 58 selon la direction de rotation X.

Le système de verrouillage 20 comprend des couples d'éléments de glissement et de coincement tels que des galets 49, 51, et un ressort de compression 50. Chacun des couples, ici au nombre de trois, ainsi que le ressort correspondant 50 est reçu dans l'un des évidements 48. Le ressort 50 tend à écarter l'un de l'autre les galets 50, 51 de chacun des couples afin de bloquer les galets 50, 51 par coincement entre la came 46 et la couronne 44 à l'extrémité de chemins de glissement et de coincement 48. Ainsi, le système de verrouillage 20 tend, dans un état actif, à interdire tout mouvement de rotation autour de l'axe de rotation X entre la came 46 et la couronne 44.

L'élément de blocage 24 se présente sous forme d'une plaque métallique estampée ou matricée. Elle comprend essentiellement deux portions de crantage 26a, 26b et deux pattes élastiques 30a, 30b. Les portions de crantage 26a, 26b comprennent chacune trois dents 28a, 28b ayant sensiblement le même pas que les crans 32 dans lesquels elles sont destinées à s'insérer. Les pattes élastiques 30a, 30b présentent chacune, à une extrémité libre, une portion extrême 32a, 32b venant en appui sur plusieurs portions s'appui 40 consécutives du chemin 38. Les portions extrêmes 32a, 32b des pattes élastiques sont disposées à proximité l'une de l'autre et sensiblement à 120 degrés des portions de crantages 26a, 26b. Elles sont contraintes contre le chemin 38 et exercent en réaction une pression tendant à insérer les dents 28a et les dents 28b dans les crans 32 correspondants. L'élément de blocage 24 comprend en outre des ouvertures 34 recevant les tétons 36 de l'élément rotatif 16, afin de lier en rotation l'élément rotatif 16 et l'élément de blocage 24.

Le système de commande 18 comprend, outre le levier de commande 7 une couronne de commande 58 portant six doigts de commande 52a, 52b, 52c, 52d, 52e, 52f s'étendant suivant la direction de l'axe de rotation X et disposés dans les évidements 48. Les doigts de commande 52a, 52b, 52c, 52d, 52e, 52f tendent à déplacer l'un ou l'autre des galets 49, 51 de chacun des couples selon le sens dans lequel on agit sur le levier de commande 7, afin d'amener le système de verrouillage 20 dans un état inactif et de venir au contact des pattes 64 de la came 46 pour la faire tourner par rapport à la couronne 44 et ainsi faire pivoter le pignon 62 par rapport au support 14.

Le système de commande 18 comprend en outre un étage de commande renfermé dans le capot 60 avec le système de verrouillage 20 auquel il est superposé. L'étage de commande est interposé entre la poignée de commande 7 et le système de verrouillage 20, et comprend essentiellement une came 66 et trois couples de galets (ou billes) 67, 69 écartés chacun par un ressort de compression 68. Pour une description plus détaillée de l'étage de commande, on pourra se reporter au document FR-2 792 264 décrivant un tel étage de commande. L'étage de commande permet de toujours ramener le levier de commande 7 dans la même position N lorsqu'il n'est pas actionné et ainsi d'agir sur le levier de commande 7 par une succession de brefs mouvements, du type pompage.

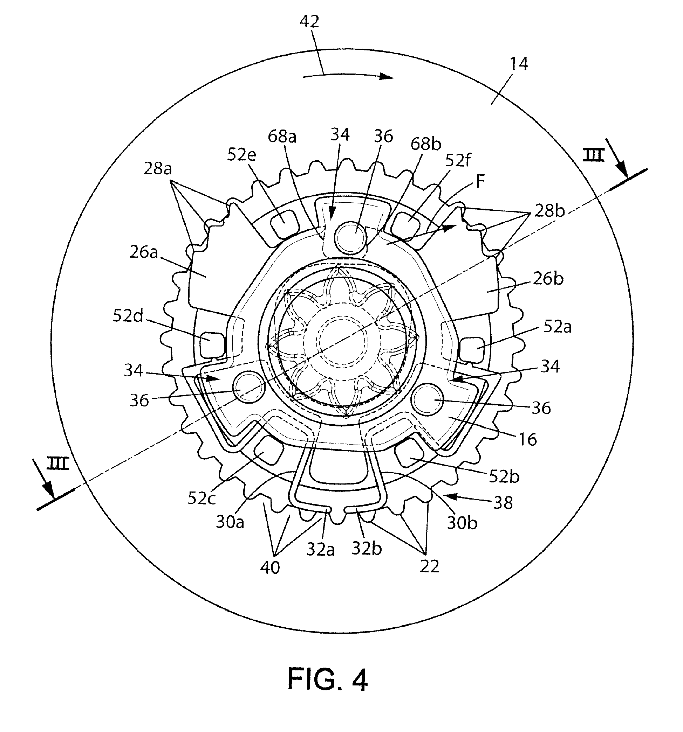

Tel qu'indiqué à la figure 4, en cas de sollicitation s'exerçant par la bielle 12b sur le pignon 62, l'élément rotatif 16 est susceptible d'être entraîné en rotation, par exemple dans le sens indiqué par la flèche 42, malgré l'action du système de verrouillage 20. Lorsque l'un des tétons 36 de l'élément rotatif 16 vient au contact d'un épaulement 68b délimitant l'une des ouvertures 34, le couple s'exerçant sur le pignon 62 engendre alors une force F sur l'élément de blocage 40. Cette force tend à insérer les dents 28b dans les crans 22 et ainsi à compléter l'effort des pattes élastiques 30a, 30b. L'élément de blocage 24 est par conséquent immobilisé par rapport au support 14 et du fait de la liaison en rotation entre l'élément de blocage 24 et l'élément rotatif 16 par l'intermédiaire du téton 36 venant en butée contre l'épaulement 68b, l'élément rotatif 16 est également immobilisé en rotation.

De manière analogue, en cas de sollicitation entraînant l'élément rotatif 16 dans le sens opposé au sens 42, le téton 36 va venir buter contre un épaulement 68a délimitant l'une des ouvertures 34 et symétrique de l'épaulement 68b. Le téton 36 va alors générer une force tendant à insérer les dents 28a dans les crans 22 et ainsi à immobiliser l'élément rotatif 16 par rapport au support 12.

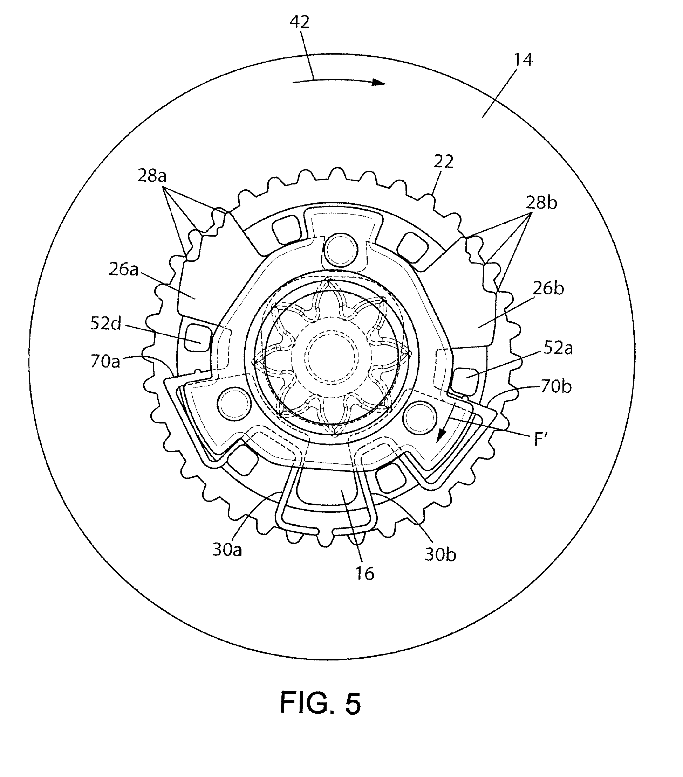

En revanche, tel qu'illustré à la figure 5, lorsque l'utilisateur agit sur le levier de commande 7, il fait tourner la couronne de commande 58, par exemple dans le sens de la flèche 42. Le doigt de commande 52a, situé juste après la portion de crantage 26b suivant le sens de rotation 42, vient alors au contact d'un épaulement 70b de l'élément de blocage 24 et exerce une force F' sur l'élément de blocage 40 s'opposant à la sollicitation des pattes élastiques 30a, 30b et amenant les dents 28b et 28a à l'écart des crans 22. L'élément de blocage 24 ne s'oppose donc pas à la rotation de l'élément rotatif 16, tel qu'indiqué précédemment en relation avec le système de verrouillage.

De manière analogue, lorsque l'utilisateur agit sur le levier de commande 7 en sens inverse, faisant tourner la couronne de commande 58 dans le sens opposé à la flèche 42, le doigt de commande 52d, situé juste après la portion de crantage 26a suivant le sens de rotation opposé au sens 42, vient alors au contact d'un épaulement 70a de l'élément de blocage 24 et exerce une force sur l'élément de blocage 40 amenant les dents 28b et 28a à l'écart des crans 22.

## Revendications

1. Dispositif de réglage (6), en particulier destiné à régler en hauteur une assise (3) de siège (1) de véhicule, comprenant :
- un support (14),
- un élément rotatif (16) guidé en rotation autour d'un axe de rotation (X),
- un système de commande (18) pour faire tourner l'élément rotatif par rapport au support,
- un système de verrouillage (20) pour sélectivement interdire ou autoriser la rotation de l'élément rotatif (16) par rapport au support (14),
**caractérisé en ce que** le dispositif de réglage (6) comprend en outre :
- des crans (22) solidaires du support (14),
- un élément de blocage (24) comprenant au moins une portion de crantage (26a, 26b), ledit élément de blocage (24) étant radialement mobile entre une position active dans laquelle ladite portion de crantage (26a, 26b) est inséré dans l'un au moins des crans (22) pour bloquer la rotation de l'élément de blocage (24) par rapport au support (14) autour de l'axe de rotation (X) et une position inactive dans laquelle ladite portion de crantage (26a, 26b) est à l'écart desdits crans (22) pour autoriser la rotation de l'élément de blocage (24) par rapport au support (14) autour de l'axe de rotation (X),
- des moyens de pression (30a, 30b) sollicitant l'élément de blocage (24) vers sa position active,
- des moyens de liaison (34, 36, 68a, 68b) retenant l'élément rotatif (16) en rotation autour de l'axe de rotation (X) par rapport à l'élément de blocage (24).

2. Dispositif selon la revendication 1, dans lequel la rotation de l'élément rotatif (16) en l'absence d'action sur le système commande (18) engendre une force (F) agissant sur l'élément de blocage (24) dans le sens de l'insertion de la portion de crantage (26a, 26b) dans les crans (22).

3. Dispositif dans selon la revendication 1 ou la revendication 2, dans lequel l'élément de blocage (24) est constitué d'une plaque découpée intégrant une patte (30a, 30b) radialement contrainte constituant les moyens de pression.

4. Dispositif selon l'une quelconque des revendications précédentes, dans lequel le support (14) comprend un chemin (38) discontinu comportant une succession de portions d'appui (40) entre lesquelles s'étendent radialement vers l'extérieur les crans (22) et la patte (30a, 30b) vient en appui simultanément sur une pluralité de portions d'appui (40) successives dudit chemin (38).

5. Dispositif selon l'une quelconque des revendications précédentes, dans lequel chaque portion de crantage (26a, 26b) comprend une pluralité de dents (28a, 28b) s'insérant chacune dans un cran (22) correspondant.

6. Dispositif selon l'une quelconque des revendications précédentes, dans lequel l'élément de blocage (24) comprend une première portion de crantage (26b) bloquant la rotation de l'élément de blocage (24) par rapport au support (14) autour de l'axe de rotation (X) dans un premier sens de rotation (42b) et une deuxième portion de crantage (26a) bloquant la rotation de l'élément de blocage (24) par rapport au support (14) autour de l'axe de rotation (X) dans un deuxième sens de rotation opposé au premier sens de rotation (42b).

7. Dispositif selon l'une quelconque des revendications précédentes, dans lequel le système de verrouillage (20) comprend:
- une couronne (44) liée au support (14),
- une came (46) liée à l'élément rotatif (16), la came (46) et la couronne (44) définissant entre elles un chemin de glissement et de coincement (48),
- des éléments de glissement et de coincement (50) disposés dans le chemin de glissement et de coincement (48), ces éléments de glissement et de coincement (49-51) étant normalement dans un état verrouillé dans lequel ils coopèrent avec la came (46) et la couronne (44) pour empêcher la rotation de la came (46) par rapport à la couronne (44) autour de l'axe de rotation (X) en l'absence d'action sur le système de commande (18), le système de commande (18) étant adapté pour amener les éléments de glissement et de coincement (49-51) dans un état déverrouillé dans lequel ils autorisent la rotation de la came (46) par rapport à la couronne (44) autour de l'axe de rotation (X).

8. Dispositif selon la revendication 7, dans lequel le système de commande (18) comprend au moins un doigt (52a, 52d) adapté pour amener l'élément de blocage (24) en position inactive et pour amener les éléments de glissement et de coincement (49-51) dans l'état déverrouillé par rotation autour de l'axe de rotation (X).

9. Dispositif selon l'une quelconque des revendications précédentes, dans lequel les moyens de liaison comprennent des protubérances (36) faisant saillie sur l'élément rotatif (16) suivant la direction de l'axe de rotation (X) et s'insérant dans des ouvertures (34, 68a, 68b) complémentaires ménagées dans l'élément de blocage (24).

10. Véhicule comportant un plancher (4) et un siège (1) comprenant une assise (3), un dossier (2) et un dispositif (6) selon l'une quelconque des revendications précédentes pour régler la hauteur de l'assise (3) par rapport au plancher (4).
